# EUROPEAN PATENT APPLICATION

(11) **EP 4 821 970 A1**
(43) Date of publication of application: **14.10.2026**
(21) Application number: 24900494.6
(22) Date of filing: 26.11.2024
(51) Int. Cl.: C08J 5/18, B32B 9/00, B32B 27/30, C08J 7/048, C08L 33/02, C08L 101/02, C09D 5/00, C09D 201/02

(54) **MOISTURE TRAPPING FILM**

(30) Priority: 08.12.2023 JP 2023207846
(71) Applicant: Toyo Seikan Group Holdings, Ltd., Shinagawa-ku Tokyo 141-8627 (JP)
(72) Inventor: TAKAYAMA, Keisuke, Yokohama-shi, Kanagawa 240-0062 (JP); NANGOU, Shunya, Yokohama-shi, Kanagawa 240-0062 (JP); OKUYAMA, Shinpei, Tokyo 141-8627 (JP)
(74) Representative: J A Kemp LLP
(86) International application number: PCT/JP2024/041762
(87) International publication number: WO 2025/121200

(57) **Abstract**

Provided is a moisture-trapping film containing a cationic polymer (a) and a highly hygroscopic polymer (b) having an achieved humidity lower than that of the cationic polymer (a). The highly hygroscopic polymer (b) is an anionic polymer neutralized product having a light transmittance of 90% or more at a wavelength of 400 nm as measured at 21°C in the form of an aqueous dispersion having a solid content concentration of 10 mass%.

## Description

### Technical Field

The present invention relates to a moisture-trapping film that exhibits a moisture-trapping property and is suitable for use in drying, blocking of moisture, and the like. The present invention further relates to a gas-barrier laminate provided with the moisture-trapping film, and a coating composition used for producing the moisture-trapping film.

### Background Art

Forming, through vapor deposition, an inorganic barrier layer made of silicon oxide or the like, on a surface of a plastic base material is known as a means for improving the properties of various plastic base materials, and particularly the gas-barrier properties thereof (Patent Document 1).

Incidentally, in various electronic devices developed and used in practical applications in recent years, such as organic electroluminescent (organic EL) devices, solar cells, touch panels, and electronic paper, charge leakage is undesirable, and therefore high moisture barrier properties are required in, for example, the plastic base materials that form the circuit boards and the like or the films that seal the circuit boards. However, since the formation of an inorganic barrier layer described above cannot satisfy such high requirements for moisture barrier properties, various proposals have been made to improve moisture barrier properties, that is, moisture-trapping properties.

A typical example of a film exhibiting a moisture-trapping property is a film of a hygroscopic polymer such as a polyamide. Moreover, a film in which a hygroscopic material such as a silica gel or aluminum oxide is dispersed in a polymer binder such as an electron beam or ultraviolet curable resin is also known. For example, Patent Document 2 proposes a gas-barrier film having a structure in which a layer of a film exhibiting a moisture-trapping property like that described above is laminated as a water-trapping layer on the abovementioned inorganic barrier layer. However, even a laminated film in which a film exhibiting such a moisture-trapping property is used does not ensure the advanced moisture barrier properties required in various electronic devices.

Meanwhile, the present applicant proposed, as a gas-barrier film exhibiting advanced moisture barrier properties, a laminated film (gas-barrier laminate) in which a moisture-trapping layer having a specific moisture absorbent dispersed in an ionic polymer matrix is formed on an inorganic barrier layer on a plastic base material (Patent Documents 3 and 4). The moisture-trapping layer in this laminated film has a structure in which a granular moisture absorbent having a lower humidity level than the cationic polymer is dispersed in a matrix composed of the ionic polymer, and moisture is trapped by the water absorption exhibited by the ionic polymer, and further, moisture released from the cationic polymer is captured by the granular moisture absorbent. As a result, the laminated film thereof exhibits the advanced moisture barrier properties required for various electronic devices over a long period of time. Here, examples of the granular moisture absorbent include inorganic moisture absorbents such as zeolite, and organic moisture absorbents such as a crosslinked product of an anionic polymer and a crosslinked product of a partially neutralized product of an anionic polymer (for example, crosslinked sodium poly(meth)acrylate).

### Citation List

### Patent Documents

Patent Document 1: JP 2000-255579 A
Patent Document 2: JP 2009-90633 A
Patent Document 3: JP 6287288 B
Patent Document 4: JP 6519974 B

### Summary of Invention

### Technical Problem

However, the transparency of the above moisture-trapping film developed by the present applicant is low, making it difficult for use in applications that require transparency, and thus improvements are required in this area. Moreover, the smoothness of the film surface is also low, and thus improvements are also required in terms of lamination properties with other films.

In addition, unfortunately, when the above moisture-trapping film is laminated with a barrier film having an inorganic vapor-deposited layer, the moisture barrier property decreases in a short amount of time.

Accordingly, an object of the present invention is to provide a moisture-trapping film having excellent optical properties and excellent surface smoothness.

Another object of the present invention is to provide a laminated film produced by laminating the moisture-trapping film and a barrier film having an inorganic barrier layer, wherein a decrease in the moisture-trapping property over time is effectively suppressed.

Yet another object of the present invention is to provide a coating composition for use in the production of the above moisture-trapping film.

### Solution to Problem

The present inventors further examined the moisture-trapping layer formed in each of the laminated films (gas-barrier laminates) proposed in Patent Documents 3 and 4, and as a result, discovered that the moisture-trapping property is maintained for a long period of time by using, in place of a granular moisture absorbent dispersed in a cationic polymer, a neutralized product of an anionic polymer for which the light transmittance exhibited by an aqueous dispersion under certain conditions is high. On the basis of this knowledge, the present inventors arrived at the present invention.

That is, according to the present invention, provided is a moisture-trapping film containing a cationic polymer (a) and a highly hygroscopic polymer (b) for which the achieved humidity is lower than that of the cationic polymer (a). The highly hygroscopic polymer (b) is an anionic polymer neutralized product having a light transmittance of 90% or more at a wavelength of 400 nm as measured at 21°C in the form of an aqueous dispersion having a solid content concentration of 10 mass%.

In the moisture-trapping film of the present invention, the following aspects are suitably employed.
(1) The highly hygroscopic polymer (b) is a neutralized product of an anionic polymer having an anionic functional group selected from the group consisting of a carboxy group, a sulfonic acid group, and a phosphoric acid group.
(2) The highly hygroscopic polymer (b) is a neutralized product of (meth)acrylic acid.
(3) The highly hygroscopic polymer (b) exhibits a pH of 10 or less in an aqueous dispersion having a concentration of 5 mass% at 25°C.
(4) The highly hygroscopic polymer (b) is present at an amount of from 11 to 1000 parts by mass per 100 parts by mass of the cationic polymer (a).
(5) The moisture-trapping film exhibits a haze of 4.7% or less.
(6) The moisture-trapping film surface exhibits a surface roughness Sa (ISO 25178-2:2012) of 11 nm or less.

According to the present invention, also provided is a gas-barrier laminate having a layered structure in which the above moisture-trapping film and a barrier film having an inorganic barrier layer formed on a surface of a plastic base material are laminated.

According to the present invention, also provided is a coating composition containing a cationic polymer (a), a highly hygroscopic polymer (b) having an achieved humidity lower than that of the cationic polymer (a), and a solvent. The cationic polymer (a) and the highly hygroscopic polymer (b) are dissolved or dispersed in the solvent. The highly hygroscopic polymer (b) is an anionic polymer neutralized product having light transmittance of 90% or more at a wavelength of 400 nm as measured at 21°C in the form of an aqueous dispersion having a solid content concentration of 10 mass%.

In the above coating composition, as in the case of the moisture-trapping film described above, preferably:
(1) the highly hygroscopic polymer (b) exhibits a pH of 10 or less in an aqueous dispersion having a concentration of 5 mass% at 25°C;
(2) the highly hygroscopic polymer (b) is used at an amount of from 11 to 1000 parts by mass per 100 parts by mass of the cationic polymer (a); and
(3) the solvent is a mixed solvent of water and an alcohol.

### Advantageous Effects of Invention

The moisture-trapping film of the present invention contains, as basic components, a cationic polymer (a) and a highly hygroscopic polymer (b) having a lower achieved humidity than that of the cationic polymer (a). That is, similar to a moisture-trapping film (or moisture-trapping layer) in the related art, the moisture-trapping film of the present invention has a structure in which the permeation of moisture is blocked by moisture absorption by the cationic polymer, and the moisture released from the cationic polymer (a) is captured by the highly hygroscopic polymer (b), which has even higher hygroscopicity. In this basic structure, the present invention uses a neutralized product of an anionic polymer as this type of hygroscopic polymer (b), but this neutralized product must exhibit light transmittance of 90% or more at a wavelength of 400 nm as measured at 21°C in the form of an aqueous dispersion having a solid content concentration of 10 mass%. The moisture-trapping performance is ensured for a long period of time by using this type of neutralized product.

That is, a neutralized product of an anionic polymer exhibiting light transmittance as described above contains numerous non-crosslinking linear molecules, and the content proportion of granulated crosslinking molecules is small. In moisture-trapping films in the related art, a polymer that contains a large amount of crosslinked components is used as the highly hygroscopic polymer, and such a moisture-trapping film (see Comparative Example 1 described below) has a high level of haze and a large surface roughness Sa of the film surface. However, in the moisture-trapping film of the present invention (see Example 1 described below), the highly hygroscopic polymer (b) contains a small amount of crosslinked components that are granulated and a large amount of a non-crosslinked components dispersed in a layer form, and therefore, the film exhibits excellent optical characteristics, as well as characteristics such as low haze and a small surface roughness Sa of the film surface.

Therefore, the moisture-trapping film of the present invention can be effectively used in applications requiring transparency, and is also suitably used for lamination with other films.

In addition, in a gas-barrier laminate in which the moisture-trapping film of the present invention is laminated with an inorganic barrier layer, a decrease in the water vapor transmission rate (WVTR: g/m²/day) in association with the passage of time is suppressed, and therefore, such a gas-barrier laminate is extremely useful as a sealing material in various electronic devices requiring a high degree of moisture barrier properties.

### Brief Description of Drawings

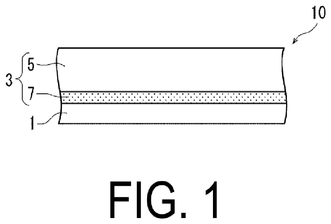

FIG. 1 is a diagram illustrating a layered structure of a barrier film and a moisture-trapping film of the present invention.

### Description of Embodiments

### Moisture-Trapping Film

The moisture-trapping film of the present invention is formed from a blended product of a cationic polymer (a) and a highly hygroscopic polymer (b) having an achieved humidity lower than that of the cationic polymer (a), and exhibits a function of trapping moisture through the moisture absorption of both polymers.

### Cationic Polymer (a)

The cationic polymer (a) used in the present invention is a polymer having, in the molecule, a cationic group that can be positively charged in water, such as, for example, primary to tertiary amino groups, a quaternary ammonium group, a pyridyl group, an imidazole group, and a quaternary pyridinium. Such a cationic polymer exhibits a hygroscopic property because the cationic groups have a strong nucleophilic action and can supplement water through hydrogen bonds.

The amount of cationic groups in the cationic polymer (a) need only be an amount at which the water absorption rate (JIS K-7209-1984) of the polymer in an atmosphere with a humidity of 80% RH and a temperature of 30°C is 20% or more, and particularly from 30% to 45%.

Examples of usable cationic polymers (a) having a cationic group like that described above include those obtained by polymerizing, or copolymerizing together with another copolymerizable monomer as appropriate, at least one cationic monomer typified by amine-based monomers such as allylamine, ethyleneimine, vinylbenzyltrimethylamine, [4-(4-vinylphenyl)-methyl]-trimethylamine, and vinylbenzyltriethylamine; nitrogen-containing heterocyclic monomers such as vinylpyridine and vinylimidazole; and salts thereof, followed by, as necessary, partial neutralization through an acid treatment and adjustment of the amount of cationic groups.

Note that examples of the other copolymerizable monomer include, but are not limited to, styrene, vinyl toluene, vinyl xylene, α-methylstyrene, vinyl naphthalene, α-halogenated styrenes, acrylonitrile, acrolein, methyl vinyl ketone, and vinyl biphenyl. Polyfunctional monomers such as divinylbenzene may also be used.

Alternatively, instead of using the cationic monomer noted above, a monomer having a functional group to which a cationic functional group can be introduced, for example, styrene, bromobutylstyrene, vinyl toluene, chloromethylstyrene, vinyl pyridine, vinyl imidazole, α-methylstyrene, vinyl naphthalene, or the like may be used, and a treatment such as amination or alkylation (quaternary ammonium chloride) can be implemented after polymerization to obtain the cationic polymer (a).

In the present invention, among the cationic polymers (a) described above, polyallylamine is particularly preferable from viewpoints such as film formability, and furthermore, from the viewpoint of suppressing swelling due to moisture absorption, a crosslinked structure is preferably introduced into the cationic polymer (a).

The crosslinked structure can be introduced by using a polyfunctional monomer such as divinylbenzene as a copolymerization component in the process of polymerization for forming the cationic polymer (a).

The crosslinked structure can also be introduced by using a crosslinking agent separate from the monomer.

As described, for example, in JP 2015-96320 A and the like, as such a crosslinking agent, a compound including a crosslinkable functional group (e.g., an epoxy group) that can react with a cationic group, and a functional group (e.g., an alkoxysilyl group) that can form a siloxane structure in the crosslinked structure through hydrolysis and dehydration condensation can be used, and more specifically, a silane compound represented by the following formula (1) is suitably used:

X-SiR¹ₙ(OR²)₃₋ₙ (1)

where
X is an organic group having an epoxy group at a terminal,
R¹ and R² are each a methyl group, an ethyl group, or an isopropyl group, and
n is 0, 1, or 2.

A typical example of the organic group X having an epoxy group in Formula (1) of such a silane compound is a γ-glycidoxyalkyl group, and for example, γ-glycidoxypropyltrimethoxysilane or γ-glycidoxypropylmethyldimethoxysilane is suitably used as a crosslinking agent.

In addition, those in which the epoxy group in Formula (1) is an alicyclic epoxy group such as an epoxy cyclohexyl group are also suitable as the crosslinking agent. For example, when a compound having an alicyclic epoxy group such as β-(3,4-epoxycyclohexyl) ethyltrimethoxysilane is used as a crosslinking agent, an alicyclic structure is introduced together with a siloxane structure. The introduction of such an alicyclic structure is preferable from the perspective of forming a network structure of spaces suitable for moisture absorption.

Further, in order to introduce an alicyclic structure into the crosslinked structure, a compound having a plurality of epoxy groups and alicyclic groups, for example, a diglycidyl ester represented by Formula (2), can be used as a crosslinking agent:

G-O(C=O)-A-(C=O)O-G (2)

where
G is a glycidyl group, and
A is a divalent hydrocarbon group having an aliphatic ring, for example, a cycloalkylene group. Typical examples of such diglycidyl esters are represented by the following Formula (2-1).

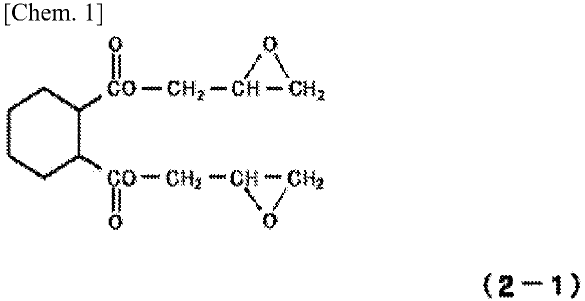

The diglycidyl ester of Formula (2) does not have an alkoxysilyl group, but introduces an alicyclic structure into the crosslinked structure, and thus is effective in that a network structure of spaces suitable for moisture absorption is formed in the cationic polymer.

It is desirable that the crosslinking agent described above is used at an amount of from 5 to 60 parts by mass, and particularly from 15 to 50 parts by mass, per 100 parts by mass of the cationic polymer, and it is desirable that at least 70 mass% or more, and preferably 80 mass% or more of such a crosslinking agent is a silane compound of Formula (1) described above.

In principle, the introduction of the crosslinked structure using the crosslinking agent described above can be also carried out by blending the crosslinking agent into a below-described coating composition for forming the moisture-trapping film, but the use of such a crosslinking agent should be avoided because the physical properties of the highly hygroscopic polymer (b) that is used in combination are changed. That is, the crosslinked structure must be introduced at a stage prior to mixing with the highly hygroscopic polymer (b).

It should be noted that the molecular weight of the cationic polymer (a) need only be a molecular weight sufficient for forming a film.

### Highly Hygroscopic Polymer (b)

The highly hygroscopic polymer (b) used in the present invention is a polymer having an achieved humidity lower than that of the cationic polymer (a) described above, that is, the highly hygroscopic polymer (b) exhibits a higher level of hygroscopicity than the cationic polymer (a). Through the combined use of the polymer (b) exhibiting such a high level of hygroscopicity with the cationic polymer (a), when moisture absorbed by the cationic polymer (a) is released, the moisture thereof is absorbed by the highly hygroscopic polymer (b), and thereby the release of moisture to the outside is prevented, and the moisture-trapping property can be ensured over a long period of time.

As indicated in the below-described examples, the achieved humidity of the highly hygroscopic polymer (b) can be evaluated by the moisture content measured in a constant absolute dry state. For example, the moisture content of the above-described cationic polymer (a) as measured in a predetermined absolute dry state is about 2%, whereas the moisture content of the highly hygroscopic polymer (b) measured under the same conditions is 7% or more, and from this, it is understood that the achieved humidity of the highly hygroscopic polymer (b) is lower than that of the cationic polymer (a). That is, by using such a highly hygroscopic polymer (b), excellent water absorption performance is exhibited even in a dry state in which the cationic polymer (a) cannot exhibit sufficient water absorption, and thus high moisture barrier properties can be exhibited.

As such a highly hygroscopic polymer (b), a neutralized product of an anionic polymer is used.

The anionic polymer has an anionic functional group that can become negatively charged in water. Examples of the anionic function group include an acidic group such as a carboxylic acid group, a sulfonic acid group, a phosphoric acid group, or a phosphonic acid group, and in the present invention, these anionic groups must be neutralized with an alkali. If the anionic groups are not neutralized, the anionic groups react with the cationic groups of the cationic polymer that is used in combination, and as a result, the hygroscopicity is impaired. In the case of partial neutralization, even if a certain degree of hygroscopicity can be ensured, alkali atoms such as Na and K are inevitably present, and these alkali atoms diffuse in the film and cause a reduction in the moisture-trapping property. For example, when the moisture-trapping film is used by being laminated on a barrier film, the inorganic barrier layer of the barrier film is deteriorated, and as a result, a large amount of moisture flows into the moisture-trapping film, and the moisture-trapping property is depleted. In the present invention, such harmful effects due to alkali atoms can be effectively prevented by using a neutralized product of an anionic polymer as the highly hygroscopic polymer (b).

For example, since the highly hygroscopic polymer (b) used in the present invention is a neutralized product of an anionic polymer, the pH of the aqueous dispersion thereof is higher than that of a non-neutralized product but lower than that of a partially neutralized product, and is 10 or less in the form of an aqueous dispersion having a concentration of 5 mass% at 25°C. A partially neutralized product contains a large amount of excess alkali atoms, and therefore, the pH thereof is higher than 10, and these alkali atoms are a factor that causes a decrease in the moisture-trapping property over time.

Moreover, the neutralized product of the anionic polymer must exhibit light transmittance of 10% or more, and particularly 90% or more, at a wavelength of 400 nm as measured at 21°C in the form of an aqueous dispersion having a solid content concentration of 10 mass%.

This light transmittance indicates the degree of the non-crosslinked components (that is, chain-shaped polymer components) contained in the neutralized product, and light transmittance of a value as described above means that a large amount of chain-shaped polymer components are contained, and the content of the crosslinked polymer components is very small. In the present invention, the smoothness and optical properties of the film surface can be enhanced by using such a chain-shaped polymer as the highly hygroscopic polymer (b).

That is, a linear polymer component contained at a large amount in the neutralized product of the anionic polymer can be mixed and dispersed with the cationic polymer (a) without being granulated, is present in a phase-like dispersed state in the film, and is dispersed in a state of a continuous layer. Therefore, aggregation of particles is effectively prevented, unevenness due to aggregates is prevented from being reflected on the surface, and the film surface exhibits a high level of smoothness. For example, the surface roughness Sa (ISO 25178-2:2012) of the moisture-trapping film of the present invention is in a range of 11 nm or less, and particularly 7 nm or less. Here, Ra, which represents the arithmetic mean height of the line, is a parameter that is extended to the surface.

That is, the moisture-trapping film of the present invention having the surface roughness Sa as described above has a surface with a high level of smoothness, and thus excels in lamination properties with other films and exhibits uniform moisture-trapping properties (moisture barrier properties).

In addition, coarsening due to particle aggregation of the neutralized product of the anionic polymer (highly hygroscopic polymer (b)) that exhibits high light transmittance as described above is suppressed, and thus a decrease in transparency due to scattering or the like is also suppressed. Accordingly, the moisture-trapping film of the present invention exhibits a high level of transparency, and for example, exhibits a haze of 4.7% or less, and particularly 2.0% or less.

A gel fraction is known as a parameter that indicates the crosslinked state of a polymer component, but such a gel fraction cannot indicate the crosslinked state (non-crosslinked state) of the neutralized product of the anionic polymer (highly hygroscopic polymer (b)) used in the present invention. That is, the gel fraction is determined by measuring the amount dissolved in a certain solvent and calculating the ratio of the amount dissolved in the solvent to the amount not dissolved in the solvent. Here, when attempting to measure the gel fraction of the neutralized product of the anionic polymer, water is used as the solvent because the chain-shaped anionic polymer component is water-soluble, but the chain-shaped component dissolved in water and the crosslinked component not dissolved in water cannot be separated with high accuracy. This is because the crosslinked polymer that is not dissolved in water is highly hygroscopic and thus is also dispersed in water, and therefore the crosslinked polymer that is not dissolved in water cannot be separated by filter paper or the like.

Accordingly, in the present invention, the light transmittance functions as a parameter indicating the content of the linear polymer. For example, when the entire amount of the neutralized product of the anionic polymer is dissolved in water, the light transmittance is the same as that of water (100%), and as the proportion of the crosslinked polymer contained in the neutralized product increases, the light transmittance decreases. That is, in a liquid obtained by dispersing the neutralized product of the anionic polymer in water, the light transmittance can be measured without separating the non-crosslinked components and crosslinked components, and therefore, the content proportion of the non-crosslinked components can be accurately recognized by the light transmittance.

Such a highly hygroscopic polymer (b) (neutralized product of an anionic polymer) is obtained by polymerizing, or copolymerizing together with another copolymerizable monomer as appropriate, at least one anionic monomer typified by: carboxylic acid-based monomers such as methacrylic acid, acrylic acid, and maleic anhydride; sulfonic acid-based monomers such as α-halogenated vinyl sulfonic acid, styrene sulfonic acid, and vinyl sulfonic acid; phosphonic acid-based monomers such as vinylphosphoric acid; and salts of these monomers, followed by neutralization through an alkali treatment.

Note that examples of the other copolymerizable monomer include, but are not limited to, styrene, vinyl toluene, vinyl xylene, α-methylstyrene, vinyl naphthalene, α-halogenated styrenes, acrylonitrile, acrolein, methyl vinyl ketone, and vinyl biphenyl.

Alternatively, instead of using the anionic monomer noted above, an ester of the anionic monomer or a monomer having a functional group to which an anionic functional group can be introduced, such as styrene, vinyl toluene, vinyl xylene, α-methylstyrene, vinyl naphthalene, or α-halogenated styrenes, can be used, and a treatment such as hydrolysis, sulfonation, chlorosulfonation, or phosphonium formation can be implemented after polymerization to obtain an anionic polymer that is subsequently neutralized, and thereby a neutralized product of an anionic polymer for use as the highly hygroscopic polymer (b) can be obtained.

Since the highly hygroscopic polymer (b) used in the present invention contains a large amount of a non-crosslinked linear polymer, in order to obtain the anionic polymer, polyfunctional monomers having two or more functionalities are basically not used. Even if such polyfunctional monomer is used, the amount is small enough to ensure that the light transmittance is within the above-mentioned range.

Furthermore, similar to the above-described cationic polymer (a), the molecular weight of the highly hygroscopic polymer (b) need only be a molecular weight sufficient for forming a film.

In the present invention, the highly hygroscopic polymer (b) that is used is preferably sodium poly(meth)acrylate from the perspectives of availability and cost, and for example, sodium polyacrylate is commercially available from Nippon Shokubai Co., Ltd. under the trade name of Aqualic DL-522, and is represented by the following formula.

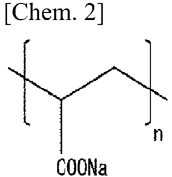

In this formula, n is a positive integer.

In the present invention, it is preferable that the cationic polymer (a) and the highly hygroscopic polymer (b) described above be present in the moisture-trapping film in a certain balance in order to exhibit the moisture-trapping property for a longer period of time, and in a case in which either one is present in excess of the necessary amount, sufficiently exhibiting the moisture-trapping property tends to be difficult. For example, the highly hygroscopic polymer (b) is suitably present in the film at an amount of from 11 to 3122 parts by mass, preferably from 40 to 1500 parts by mass, and more preferably from 55 to 400 parts by mass, per 100 parts by mass of the cationic polymer (a).

### Production of Moisture-Trapping Film

The moisture-trapping film of the present invention containing the cationic polymer (a) and the highly hygroscopic polymer (b) is formed by dissolving or dispersing the polymer components (a) and (b) in a solvent to prepare a coating composition, applying the composition to a predetermined base material, and drying the composition to remove the solvent.

Here, the solvent that is used is not particularly limited as long as it can be volatilized and removed by heating at a relatively low temperature, and usable examples of the solvent include an alcoholic solvent such as methanol, ethanol, propyl alcohol, or butanol, a ketone solvent such as acetone or methyl ethyl ketone, a mixed solvent of these solvents and water, or an aromatic hydrocarbon-based solvent such as benzene, toluene, or xylene. However, from an environmental perspective in particular, use of water or a mixed solvent of water and an alcoholic solvent is desirable.

The solvent described above is used in such an amount that the coating composition has a viscosity suitable for coating, but a nonionic polymer can also be blended in an appropriate amount in order to adjust the viscosity of the coating composition or to adjust, to an appropriate range, the water absorption rate of the moisture-trapping film to be formed.

Examples of such a nonionic polymer include polyvinyl alcohol, saturated aliphatic hydrocarbon polymers such as ethylene-propylene copolymers and polybutylene, styrene-based polymers such as styrene-butadiene copolymers, polyvinyl chloride, and copolymers of these with various comonomers (for example, styrene-based monomers such as vinyltoluene, vinylxylene, chlorostyrene, chloromethylstyrene, α-methylstyrene, α-halogenated styrene, and α,β,β'-trihalogenated styrene, monoolefins such as ethylene and butylene, and conjugated diolefins such as butadiene and isoprene).

A crosslinking agent such as a silane compound or an epoxy compound may be blended into this coating composition to introduce a crosslinked structure into the cationic polymer (a) or the highly hygroscopic polymer (b). However, as described above, the introduction of a crosslinked structure into the highly hygroscopic polymer (b) causes a change in the physical properties of the polymer (b), and as a result, the optical properties and surface smoothness of the moisture-trapping film are reduced. Therefore, the use of such crosslinking agents should be avoided.

The drying after application is carried out by heating to a temperature of, for example, about 80 to 160°C using a heating device such as a heating oven. The heating time is generally from a few seconds to a few minutes. The solvent is removed through this heating, and a moisture-trapping film is obtained.

### Moisture-Trapping Film Applications

The moisture-trapping film of the present invention is obtained as described above and not only exhibits excellent moisture-trapping properties over a long period of time, but also has excellent optical properties and surface smoothness, and therefore can be applied in various applications as a single-layer film or a laminated film obtained by laminating the moisture-trapping film with another film.

For example, in the case of a single layer film, the moisture-trapping film is formed on a base material film having releasability (for example, a polyethylene terephthalate film or a metal foil), then detached from the base material film, and subsequently affixed, using a pressure-sensitive adhesive or the like, to a film that must be kept in a dry state, and the resulting film can then be used. However, the coating composition described above may also be directly applied to a film that must be kept in a dry state, and then heated and dried, and thereby the moisture-trapping film of the present invention can be directly formed on the film.

Moreover, in a case in which the moisture-trapping film of the present invention is laminated on another film (for example, a barrier film) and used as a laminated film, the coating composition described above is directly applied onto the other film and dried to form the moisture-trapping film in the same manner as described above, and the laminated film can then be supplied for use.

### Gas-Barrier Laminate

The present invention is most suitable for use as a gas-barrier laminate by laminating the film to a barrier film having an inorganic barrier layer, taking advantage of the properties of the moisture-trapping film in particular.

Referring to FIG. 1, which illustrates a layered structure of such a gas-barrier laminate, the gas-barrier laminate 10 has a layered structure in which a moisture-trapping film 1 of the present invention is laminated on a barrier film 3.

### Barrier Film 3

The barrier film 3 is constituted of a plastic base material 5 and an inorganic barrier layer 7 formed on the surface of the base material 5.

In the barrier film 3, the plastic base material 5 may be formed of a known thermoplastic or thermosetting resin.

Examples of such resins include, but are not limited to, the following.
Polyolefins and cycloolefin copolymers, such as low-density polyethylene, high-density polyethylene, polypropylene, poly-1-butene, poly-4-methyl-1-pentene, and random or block copolymers of α-olefins such as ethylene, propylene, 1-butene, and 4-methyl-1-pentene;
ethylene-vinyl compound copolymers, such as ethylene-vinyl acetate copolymers, ethylene-vinyl alcohol copolymers, and ethylene-vinyl chloride copolymers;
styrene-based resins such as polystyrene, acrylonitrile-styrene copolymers, ABS, and α-methylstyrene-styrene copolymers;
polyvinyl compounds such as polyvinyl chloride, polyvinylidene chloride, vinyl chloride-vinylidene chloride copolymers, poly(methyl acrylate), and polymethyl methacrylate;
polyamides such as nylon 6, nylon 6-6, nylon 6-10, nylon 11, and nylon 12;
thermoplastic polyesters such as polyethylene terephthalate (PET), polybutylene terephthalate, and polyethylene naphthalate (PEN);
and also polycarbonates, polyphenylene oxides, polyimide resins, polyamide-imide resins, polyetherimide resins, fluororesins, allyl resins, polyurethane resins, cellulose resins, polysulfone resins, polyethersulfone resins, ketone resins, amino resins, and biodegradable resins such as polylactic acid; and
blended products of the above resins, resins obtained by modifying the above resins through appropriate copolymerization, and multilayer structures of the above resins.

In particular, in applications requiring transparency, polyester resins such as PET and PEN are preferred among the above, and in applications requiring heat resistance, polycarbonate and polyimide resins are preferred.

Of course, known resin blending agents such as an antioxidant and a lubricant may be blended in the various resins described above.

The form of the plastic base material 5 is not particularly limited as long as the barrier properties of the inorganic barrier layer 7 and the moisture-trapping film 1 are sufficiently exhibited, and the plastic base material 5 may have an appropriate form according to the application. However, the plastic base material 5 most commonly has a plate, film, or sheet form.

Furthermore, the thickness and the like are set within an appropriate range depending on the application and required characteristics (for example, flexibility, softness, strength, and the like).

This type of plastic base material 5 can be molded by a known molding means such as injection or co-injection molding, extrusion or co-extrusion molding, film or sheet molding, compression molding, or cast polymerization, depending on the form and the type of the plastic.

The inorganic barrier layer 7 formed on the above-described plastic base material 5 exhibits excellent barrier properties particularly against gases such as oxygen, and is formed of various metals or metal oxides. The means for forming the inorganic barrier layer 7 is not particularly limited, and for example, an inorganic vapor-deposited film may be formed by physical vapor deposition, such as sputtering, vacuum deposition, or ion plating, or by chemical vapor deposition, such as plasma CVD or atomic layer deposition (ALD), or the inorganic barrier layer 7 may be formed by coating, such as by a sol-gel method. In particular, in terms of fully utilizing the optical characteristics (transparency) of the moisture-trapping film 1 and maintaining the transparency of the laminate 10, the inorganic barrier layer 7 is preferably formed by physical vapor deposition, chemical vapor deposition, or the like. In addition, the inorganic barrier layer 7 is most preferably a vapor-deposited film formed by plasma CVD in that the film is uniformly formed even on a surface having unevenness, high adherence to the underlying layer (plastic base material 5) is ensured, and excellent barrier properties are exhibited. In this case, the high level of surface smoothness of the moisture-trapping film 1 is effectively utilized, and the gas barrier properties exhibited by the inorganic barrier layer 7 and the moisture-trapping properties (moisture barrier properties) of the moisture-trapping film 1 can be uniformly expressed without causing variation in different portions.

The thickness of the inorganic barrier layer 7 described above may be set, according to the application, to a thickness at which the desired barrier properties can be exhibited, and may generally be a thickness of 5 nm or greater, and particularly a thickness of 10 nm or greater. In addition, in order to maintain the transparency and appropriate smoothness and to fully utilize the surface smoothness of the moisture-trapping film 1, the thickness of the inorganic barrier layer 7 is preferably 800 nm or less, and particularly preferably 450 nm or less.

### Moisture-Trapping Film 1

In the present invention, the moisture-trapping film 1 is formed on the inorganic barrier layer 7 as is understood from FIG. 1. That is, the moisture-trapping film 1 may be provided on the surface of the opposite side of the plastic base material 5 (the surface on which the inorganic barrier layer 7 is not formed), but in this case, the inorganic barrier layer 7 is exposed on the surface and is easily damaged. However, damage to the inorganic barrier layer 7 can be effectively prevented by providing the moisture-trapping film 1 on the inorganic barrier layer 7.

In the gas-barrier laminate 10 provided with this type of moisture-trapping film 1, the thickness of the moisture-trapping film 1 is not particularly limited, and can be set to an appropriate thickness according to the application and the required degree of moisture barrier performance. However, generally, when the thickness is set to 1 µm or more, and particularly to an approximate range of from 2 to 10 µm, thickness unevenness can be avoided, and a super-barrier property such as a water vapor permeability of 10⁻⁵ g/m²/day or less can be stably exhibited over a long period of time.

In addition, in the gas-barrier laminate 10, since a reduction in transparency due to the aggregation of particles in the moisture-trapping film 1 is suppressed and the haze (cloudiness) of the film 1 is low, the haze of the gas-barrier laminate 10 is also low, such as 6% or less, and particularly 4% or less, and can be set such that a high level of transparency is exhibited. Therefore, such a gas-barrier laminate is suitable for applications requiring a high level of transparency (for example, a sealing material for a device such as solar cell or an organic EL).

Furthermore, since the gas-barrier laminate 10 exhibits a high level of smoothness with a surface roughness Sa of the moisture-trapping film 1 of 11 nm or less, and particularly 7 nm or less, the gas-barrier laminate 10 is excellent in lamination performance with other films, and depending on the application, a multilayer structure can be adopted by lamination with another film. In such lamination, for example, another film can be laminated on the surface of the moisture-trapping film 1 of the gas-barrier laminate 10 using a dry lamination adhesive such as an epoxy-based adhesive or a urethane-based adhesive. Of course, depending on the application, another film may also be laminated on the plastic base material 5 side.

In addition, an even higher gas-barrier property can be exhibited by using a dry lamination adhesive to laminate a plurality of the gas-barrier laminates 10.

### Examples

The excellent performance of the moisture-trapping film of the present invention will be described using the following examples.

### Evaluation of Achieved Humidity (Moisture Content)

A sample polymer solution was dropped into a bottle of a Karl Fischer moisture meter and dried by heating in an oven at 130°C for 30 minutes. After drying, the dried polymer was allowed to absorb moisture in an environment having a temperature of 40°C and 50% RH, and then dried at 40°C in a nitrogen atmosphere (0% RH) for 8 days, after which the moisture absorption amount was measured by the Karl Fischer method to determine the moisture content (amount of moisture per gram). This moisture content was used as an index of the achieved humidity. That is, the higher this moisture content, the lower the achieved humidity, and the lower the moisture content, the higher the achieved humidity.

### Light Transmittance (Degree of Non-Crosslinking)

The polymer solution was adjusted such that the solid content of the highly hygroscopic polymer was 10 mass% and then inserted into a disposable cell (made of PMMA, Spectr. UV cuvette PMMA standard), and the transmittance of light of a wavelength of 400 m was measured in an environment having a temperature of 21°C using an ultraviolet-visible-near infrared spectrophotometer (available from Shimadzu Corporation, trade name: UV-3600i Plus). This transmittance was defined as the light transmittance (degree of non-crosslinking).

### Measurement of Polymer pH

A sample polymer was diluted to 5 mass% with pure water having a temperature of 25°C, and the pH was measured using a pH meter (pH Meter D-52 available from Horiba, Ltd.).

### Measurement of Total Light Transmittance of Gas-Barrier Laminate

The total light transmittance was measured in accordance with ASTM D1003 using the HAZE METER NDH8000 (available from Nippon Denshoku Industries Co., Ltd.).

### Haze Measurement of Gas-Barrier Laminate

The haze (cloudiness) was measured in accordance with ASTM D1003 using the HAZE METER NDH8000 (available from Nippon Denshoku Industries Co., Ltd.).

### Measurement of Surface Roughness (ISO 25178-2:2012)

The surface roughness (Sa) was determined by measuring a 2 µm × 2 µm range of a sample film surface in a DFM mode using an environmentally-controlled scanning probe microscope (available from Hitachi High-Tech Corporation, trade name: AFM5300E) and a probe (available from Hitachi High-Tech Corporation, trade name: Si-DF3, tip curvature radius: 10 nm, spring constant: 1.6 N/m).

### Measurement of Total Light Transmittance and Haze of Moisture-Trapping Film

For each example, a coating solution of the example was applied onto a glass substrate having a thickness of 0.7 mm using a bar coater.

The coated glass substrate was heat-treated in a box-type electric oven under conditions including an oven temperature of 100°C and a heating time of 60 seconds to form a moisture-trapping film having a thickness of 1.5 µm, and thereby a moisture-trapping film was obtained.

The total light transmittance and haze (cloudiness) of the moisture-trapping film were measured in accordance with ASTM D1003 using the HAZE METER NDH8000 (available from Nippon Denshoku Industries Co., Ltd.).

It should be noted that since it was very difficult to measure the total light transmittance and haze (cloudiness) of the moisture-trapping film alone, the total light transmittance and haze were measured in the state in which the moisture-trapping film was formed on the glass substrate as described above. Moreover, since the glass substrate is transparent, the measured value obtained on the glass substrate can be considered to be the value of the moisture-trapping film alone.

### Measurement of Trapping Effect (Water Vapor Transmission Rate)

For each of the examples, the coating solution of the example was applied onto a vapor-deposited surface of a vapor-deposited PET film (GL-AE, available from Toppan Printing Co., Ltd.) using a bar coater.

The coated film was heat-treated in a box-type electric oven under conditions including an oven temperature of 100°C and a heating time of 60 seconds to form a moisture-trapping film having a thickness of 1.5 µm, and thereby a laminate for measuring the trapping effect was obtained.

A PET film (COSMOSHINE A4360, available from Toyobo Co., Ltd.) having a thickness of 50 µm was dry-laminated onto both surfaces of the gas-barrier laminate via a urethane-based adhesive having a thickness of 3 µm, and then aged at 40°C for 5 days, and thereby a laminate for a trapping effect was produced.

The laminate was then vacuum dried under conditions including a temperature of 100°C and a heating time of 6 hours, and measurements were carried out in an environment having a temperature of 40°C and a relative humidity of 90% RH using the PERMATRAN (available from MOCON, Inc.).

As an index of the trapping effect, the water vapor transmission rate during a measurement time of 3.5 to 4 hours was indicated as the WVTR (3.5 to 4). When this value was less than 0.1 g/m²/day, the trapping property was judged to be favorable (good), and when the value was 0.1 or more, the trapping property was judged to be unsatisfactory (poor).

Moreover, the water vapor transmission rate at 9 to 10 hours after the startup of measurements was indicated as the WVTR (9 to 10).

### Example 1

The following polyallylamine was prepared as a cationic polymer.

### Polyallylamine

PAA-15C (aqueous solution) available from Nittobo Medical Co., Ltd.

### Solid content: 15 mass%

A solution of the above polyallylamine was prepared so as to have a solid content of 10 mass%, a water content of 76.5 mass%, and a content of 2-propanol of 13.5 mass%. For this polymer solution, a crosslinking agent solution was prepared using γ-glycidoxypropyl trimethoxysilane as a crosslinking agent, and the crosslinking agent solution was prepared so as to have a solid content of 10 mass%, a water content of 76.5 mass%, and a content of 2-propanol of 13.5 mass%.

The moisture content (an index of the achieved humidity) of a polyallylamine cured product obtained from this solution was 2.1%.

Meanwhile, an anionic polymer solution was prepared using a sodium polyacrylate polymer (Aqualic DL-522, available from Nippon Shokubai Co., Ltd., aqueous solution, solid content of 30 mass%, Mw of 170000, moisture content (achieved humidity) of 7.3%, light transmittance (degree of non-crosslinking) of 90.5%) was used as a highly hygroscopic polymer, and the anionic polymer solution was prepared so as to have a solid content of 10 mass%.

The pH of the highly hygroscopic polymer measured by the above-described method was 8.5.

Next, the cationic polymer solution and a moisture absorbent solution were mixed so that the content of the moisture absorbent was 12 parts by mass per 100 parts by mass of the cationic polymer, and further, a curing agent solution was added to this mixed solution so that the content of the crosslinking agent was 7.4 parts by mass in relation to the cationic polymer, the mixture was stirred well, and thereby a coating solution for a moisture-trapping layer was prepared.

The coating solution obtained above was applied to a vapor-deposited surface of a vapor-deposited PET film (GL-AE available from Toppan Printing Co., Ltd., base material: PET (12 µm)) using a bar coater.

The coated film was heat-treated in a box-type electric oven under conditions including an oven temperature of 100°C and a heating time of 60 seconds to form a moisture-trapping film having a thickness of 5 µm on the vapor-deposited PET film, and thereby a gas-barrier laminate composed of the vapor-deposited PET film and the moisture-trapping film was obtained.

The light transmittance (degree of non-crosslinking) of the highly hygroscopic polymer and the composition of the moisture-trapping film are presented in Table 1, the total light transmittance, haze, and surface roughness (Sa) of the moisture-trapping film are presented in Table 2, and the total light transmittance, haze, and water vapor transmission rate of the gas-barrier laminate measured by the methods described above are presented in Table 3.

### Example 2

A gas-barrier laminate was obtained in the same manner as in Example 1 with the exception that the highly hygroscopic polymer and the crosslinking agent were blended such that the contents thereof were 55 parts by mass and 10 parts by mass, respectively, per 100 parts by mass of the cationic polymer.

The light transmittance (degree of non-crosslinking) of the highly hygroscopic polymer and the composition of the moisture-trapping film are presented in Table 1, the total light transmittance, haze, and surface roughness (Sa) of the moisture-trapping film are presented in Table 2, and the total light transmittance, haze, and water vapor transmission rate of the gas-barrier laminate measured by the methods described above are presented in Table 3.

### Example 3

A gas-barrier laminate was obtained in the same manner as in Example 1 with the exception that the highly hygroscopic polymer and the crosslinking agent were blended such that the contents thereof were 319 parts by mass and 28 parts by mass, respectively, per 100 parts by mass of the cationic polymer.

The light transmittance (degree of non-crosslinking) of the highly hygroscopic polymer and the composition of the moisture-trapping film are presented in Table 1, the total light transmittance, haze, and surface roughness (Sa) of the moisture-trapping film are presented in Table 2, and the total light transmittance, haze, and water vapor transmission rate of the gas-barrier laminate measured by the methods described above are presented in Table 3.

### Example 4

A gas-barrier laminate was obtained in the same manner as in Example 1 with the exception that the highly hygroscopic polymer and the crosslinking agent were blended such that the contents thereof were 3122 parts by mass and 212 parts by mass, respectively, per 100 parts by mass of the cationic polymer.

The light transmittance (degree of non-crosslinking) of the highly hygroscopic polymer and the composition of the moisture-trapping film are presented in Table 1, the total light transmittance, haze, and surface roughness (Sa) of the moisture-trapping film are presented in Table 2, and the total light transmittance, haze, and water vapor transmission rate of the gas-barrier laminate measured by the methods described above are presented in Table 3.

### Example 5

A gas-barrier laminate was obtained in the same manner as in Example 1 with the exception that polyethylenimine (PEI-70000 available from Nippon Shokubai Co., Ltd., solid content of 30 mass%, Mw of 70000, moisture content (achieved humidity) of 0.5%) was used as the cationic polymer, and the highly hygroscopic polymer and the crosslinking agent were blended such that the contents thereof were 11 parts by mass and 3.5 parts by mass, respectively, per 100 parts by mass of the cationic polymer.

The light transmittance (degree of non-crosslinking) of the highly hygroscopic polymer and the composition of the moisture-trapping film are presented in Table 1, the total light transmittance, haze, and surface roughness (Sa) of the moisture-trapping film are presented in Table 2, and the total light transmittance, haze, and water vapor transmission rate of the gas-barrier laminate measured by the methods described above are presented in Table 3.

### Example 6

A gas-barrier laminate was obtained in the same manner as in Example 5 with the exception that the highly hygroscopic polymer and the crosslinking agent were blended such that the contents thereof were 48 parts by mass and 4.6 parts by mass, respectively, per 100 parts by mass of the cationic polymer.

The light transmittance (degree of non-crosslinking) of the highly hygroscopic polymer and the composition of the moisture-trapping film are presented in Table 1, the total light transmittance, haze, and surface roughness (Sa) of the moisture-trapping film are presented in Table 2, and the total light transmittance, haze, and water vapor transmission rate of the gas-barrier laminate measured by the methods described above are presented in Table 3.

### Example 7

A gas-barrier laminate was obtained in the same manner as in Example 5 with the exception that the highly hygroscopic polymer and the crosslinking agent were blended such that the contents thereof were 204 parts by mass and 10 parts by mass, respectively, per 100 parts by mass of the cationic polymer.

The light transmittance (degree of non-crosslinking) of the highly hygroscopic polymer and the composition of the moisture-trapping film are presented in Table 1, the total light transmittance, haze, and surface roughness (Sa) of the moisture-trapping film are presented in Table 2, and the total light transmittance, haze, and water vapor transmission rate of the gas-barrier laminate measured by the methods described above are presented in Table 3.

### Example 8

A gas-barrier laminate was obtained in the same manner as in Example 5 with the exception that the highly hygroscopic polymer and the crosslinking agent were blended such that the contents thereof were 280 parts by mass and 12 parts by mass, respectively, per 100 parts by mass of the cationic polymer.

The light transmittance (degree of non-crosslinking) of the highly hygroscopic polymer and the composition of the moisture-trapping film are presented in Table 1, the total light transmittance, haze, and surface roughness (Sa) of the moisture-trapping film are presented in Table 2, and the total light transmittance, haze, and water vapor transmission rate of the gas-barrier laminate measured by the methods described above are presented in Table 3.

### Example 9

A gas-barrier laminate was obtained in the same manner as in Example 5 with the exception that the highly hygroscopic polymer and the crosslinking agent were blended such that the contents thereof were 1497 parts by mass and 49 parts by mass, respectively, per 100 parts by mass of the cationic polymer.

The light transmittance (degree of non-crosslinking) of the highly hygroscopic polymer and the composition of the moisture-trapping film are presented in Table 1, the total light transmittance, haze, and surface roughness (Sa) of the moisture-trapping film are presented in Table 2, and the total light transmittance, haze, and water vapor transmission rate of the gas-barrier laminate measured by the methods described above are presented in Table 3.

### Example 10

A gas-barrier laminate was obtained in the same manner as in Example 1 with the exception that a sodium polyacrylate polymer (Aqualic YS-100 available from Nippon Shokubai Co., Ltd., aqueous solution, solid content of 45 mass%, pH of 8.4, Mw of 5500, moisture content (achieved humidity) of 7.3%, light transmittance (degree of non-crosslinking) of 99.4%) was used as the highly hygroscopic polymer, and the highly hygroscopic polymer and the crosslinking agent were blended such that the contents thereof were 318 parts by mass and 28 parts by mass, respectively, per 100 parts by mass of the cationic polymer.

The light transmittance (degree of non-crosslinking) of the highly hygroscopic polymer and the composition of the moisture-trapping film are presented in Table 1, the total light transmittance, haze, and surface roughness (Sa) of the moisture-trapping film are presented in Table 2, and the total light transmittance, haze, and water vapor transmission rate of the gas-barrier laminate measured by the methods described above are presented in Table 3.

### Example 11

A gas-barrier laminate was obtained in the same manner as in Example 1 with the exception that a sodium polyacrylate polymer (Aqualic DL-453 available from Nippon Shokubai Co., Ltd., aqueous solution, solid content of 35 mass%, pH of 8.5, Mw of 50000, moisture content (achieved humidity) of 7.3%, light transmittance (degree of non-crosslinking) of 90.5%) was used as the highly hygroscopic polymer, and the highly hygroscopic polymer and the crosslinking agent were blended such that the contents thereof were 319 parts by mass and 28 parts by mass, respectively, per 100 parts by mass of the cationic polymer.

The light transmittance (degree of non-crosslinking) of the highly hygroscopic polymer and the composition of the moisture-trapping film are presented in Table 1, the total light transmittance, haze, and surface roughness (Sa) of the moisture-trapping film are presented in Table 2, and the total light transmittance, haze, and water vapor transmission rate of the gas-barrier laminate measured by the methods described above are presented in Table 3.

### Example 12

A gas-barrier laminate was obtained in the same manner as in Example 1 with the exception that polyethylenimine (polyethylenimine available from Fujifilm Wako Pure Chemical Corporation, solid content of 99 mass%, Mw of 10000, moisture content (achieved humidity) of 0.6%) was used as the cationic polymer, and the highly hygroscopic polymer and the crosslinking agent were blended were blended such that the contents thereof were 280 parts by mass and 12 parts by mass, respectively, per 100 parts by mass of the cationic polymer.

The light transmittance (degree of non-crosslinking) of the highly hygroscopic polymer and the composition of the moisture-trapping film are presented in Table 1, the total light transmittance, haze, and surface roughness (Sa) of the moisture-trapping film are presented in Table 2, and the total light transmittance, haze, and water vapor transmission rate of the gas-barrier laminate measured by the methods described above are presented in Table 3.

### Comparative Example 1

A gas-barrier laminate was obtained in the same manner as in Example 1 with the exception that a crosslinked product of sodium polyacrylate (TAFTIC HU-820E, available from Toyobo Co., Ltd., water dispersion product, solid content of 13 mass%, pH of 10.1, moisture content (achieved humidity) of 15.5%, light transmittance (degree of non-crosslinking) of 1.2%) was used as the highly hygroscopic polymer, and the highly hygroscopic polymer and the crosslinking agent were blended such that the contents thereof were 55 parts by mass and 10 parts by mass, respectively, per 100 parts by mass of the cationic polymer.

The light transmittance (degree of non-crosslinking) of the highly hygroscopic polymer and the composition of the moisture-trapping film are presented in Table 1, the total light transmittance, haze, and surface roughness (Sa) of the moisture-trapping film are presented in Table 2, and the total light transmittance, haze, and water vapor transmission rate of the gas-barrier laminate measured by the methods described above are presented in Table 3.

### Comparative Example 2

A gas-barrier laminate was obtained in the same manner as in Example 1 with the exception that a crosslinked product of sodium polyacrylate (TAFTIC HU-820E, available from Toyobo Co., Ltd., water dispersion product, solid content of 13 mass%, pH of 10.1, moisture content (achieved humidity) of 15.5%, light transmittance (degree of non-crosslinking) of 1.2%) was used as the highly hygroscopic polymer, and the highly hygroscopic polymer and the crosslinking agent were blended such that the contents thereof were 204 parts by mass and 20 parts by mass, respectively, per 100 parts by mass of the cationic polymer.

The light transmittance (degree of non-crosslinking) of the highly hygroscopic polymer and the composition of the moisture-trapping film are presented in Table 1, the total light transmittance, haze, and surface roughness (Sa) of the moisture-trapping film are presented in Table 2, and the total light transmittance, haze, and water vapor transmission rate of the gas-barrier laminate measured by the methods described above are presented in Table 3.

### Comparative Example 3

A gas-barrier laminate was obtained in the same manner as in Example 1 with the exception that a crosslinked product of sodium polyacrylate (TAFTIC HU-820E, available from Toyobo Co., Ltd., water dispersion product, solid content of 13 mass%, pH of 10.1, moisture content (achieved humidity) of 15.5%, light transmittance (degree of non-crosslinking) of 1.2%) was used as the highly hygroscopic polymer, and the highly hygroscopic polymer and the crosslinking agent were blended such that the contents thereof were 319 parts by mass and 28 parts by mass, respectively, per 100 parts by mass of the cationic polymer.

The light transmittance (degree of non-crosslinking) of the highly hygroscopic polymer and the composition of the moisture-trapping film are presented in Table 1, the total light transmittance, haze, and surface roughness (Sa) of the moisture-trapping film are presented in Table 2, and the total light transmittance, haze, and water vapor transmission rate of the gas-barrier laminate measured by the methods described above are presented in Table 3.

### Comparative Example 4

A gas-barrier laminate was obtained in the same manner as in Example 1 with the exception that the highly hygroscopic polymer was not used, and the crosslinking agent was blended such that the content thereof was 7 parts by mass per 100 parts by mass of the cationic polymer.

The composition of the moisture-trapping film is presented in Table 1, the total light transmittance, haze, and surface roughness (Sa) of the moisture-trapping film are presented in Table 2, and the total light transmittance, haze, and water vapor transmission rate of the gas-barrier laminate measured by the methods described above are presented in Table 3.

**[Table 1]**

| | Cationic Polymer | Highly Hygroscopic Polymer | | | Crosslinking Agent Blending Amount (PHR) |
|---|---|---|---|---|---|
| | | Type | Light Transmittance (%) | Blending Amount (PHR) | |
| Example 1 | Polyallylamine (PAA-15C) | Acrylic polymer DL-522 | 90.5 | 12 | 7.4 |
| Example 2 | Polyallylamine (PAA-15C) | Acrylic polymer DL-522 | 90.5 | 55 | 10 |
| Example 3 | Polyallylamine (PAA-15C) | Acrylic polymer DL-522 | 90.5 | 319 | 28 |
| Example 4 | Polyallylamine (PAA-15C) | Acrylic polymer DL-522 | 90.5 | 3122 | 212 |
| Example 5 | Polyethyleneimine (Epomin PEI-70000) | Acrylic polymer DL-522 | 90.5 | 11 | 3.5 |
| Example 6 | Polyethyleneimine (Epomin PEI-70000) | Acrylic polymer DL-522 | 90.5 | 48 | 4.6 |
| Example 7 | Polyethyleneimine (Epomin PEI-70000) | Acrylic polymer DL-522 | 90.5 | 204 | 10 |
| Example 8 | Polyethyleneimine (Epomin PEI-70000) | Acrylic polymer DL-522 | 90.5 | 280 | 12 |
| Example 9 | Polyethyleneimine (Epomin PEI-70000) | Acrylic polymer DL-522 | 90.5 | 1497 | 49 |
| Example 10 | Polyallylamine (PAA-15C) | Acrylic polymer YS-100 | 99.4 | 318 | 28 |
| Example 11 | Polyallylamine (PAA-15C) | Acrylic polymer DL-453 | 90.5 | 319 | 28 |
| Example 12 | Polyethyleneimine (Epomin PEI-10000) | Acrylic polymer DL-522 | 90.5 | 280 | 12 |
| Comparative Example 1 | Polyallylamine (PAA-15C) | Acrylic fine particles (HU-820E) | 1.2 | 55 | 10 |
| Comparative Example 2 | Polyallylamine (PAA-15C) | Acrylic fine particles (HU-820E) | 1.2 | 204 | 20 |
| Comparative Example 3 | Polyallylamine (PAA-15C) | Acrylic fine particles (HU-820E) | 1.2 | 319 | 28 |
| Comparative Example 4 | Polyallylamine (PAA-15C) | Absence | - | 0 | 7 |

**[Table 2]**

| | Moisture-Trapping Film | | |
|---|---|---|---|
| | Total Light Transmittance (%) | Haze (%) | Surface Roughness (Sa) (nm) |
| Example 1 | 91.79 | 0.24 | 0.24 |
| Example 2 | 91.73 | 0.2 | 0.34 |
| Example 3 | 91.57 | 0.76 | 2.9 |
| Example 4 | 91.85 | 0.2 | 0.68 |
| Example 5 | 91.08 | 0.05 | 1.2 |
| Example 6 | 91.86 | 0.74 | 3.43 |
| Example 7 | 91.84 | 0.86 | 0.77 |
| Example 8 | 91.83 | 0.7 | 2.22 |
| Example 9 | 91.87 | 0.21 | 1.76 |
| Example 10 | 91.44 | 0.4 | 6.91 |
| Example 11 | 91.64 | 0.21 | 3.46 |
| Example 12 | 91.67 | 0.11 | 1.56 |
| Comparative Example 1 | 91.6 | 17.27 | 17.31 |
| Comparative Example 2 | 91.38 | 4.83 | 13.54 |
| Comparative Example 3 | 91.03 | 5.94 | 11.59 |
| Comparative Example 4 | 90.96 | 0.04 | 12.55 |

**[Table 3]**

| | Gas-Barrier Laminate | | | |
|---|---|---|---|---|
| | Total Light Transmittance (%) | Haze (%) | Water Vapor Transmission Rate (g/m²/day) | |
| | | | WVTR (3.5 to 4) | WVTR (9 to 10) |
| Example 1 | 90.75 | 2.14 | 0.03 | 0.08 |
| Example 2 | 90.91 | 2.1 | 0.02 | 0.07 |
| Example 3 | 90.91 | 2.85 | 0.02 | 0.07 |
| Example 4 | 90.95 | 2.18 | 0.05 | 0.15 |
| Example 5 | 91.01 | 1.92 | 0.03 | 0.06 |
| Example 6 | 91.06 | 1.97 | 0.03 | 0.08 |
| Example 7 | 90.88 | 3.58 | 0.03 | 0.05 |
| Example 8 | 90.96 | 3.27 | 0.01 | 0.07 |
| Example 9 | 91.65 | 2.08 | 0.04 | 0.10 |
| Example 10 | 90.67 | 2.24 | 0.02 | 0.08 |
| Example 11 | 90.69 | 2.37 | 0.03 | 0.11 |
| Example 12 | 91.08 | 2.34 | 0.02 | 0.06 |
| Comparative Example 1 | 90.93 | 17.66 | 0.0 | 0.2 |
| Comparative Example 2 | 90.85 | 7.32 | 0.05 | 0.40 |
| Comparative Example 3 | 90.58 | 6.03 | 0.0 | 0.2 |
| Comparative Example 4 | 91.03 | 1.96 | 0.14 | 0.15 |

### Reference Signs List

1: Moisture-trapping film
3: Barrier film
5: Plastic base material
7: Inorganic barrier layer
10: Gas-barrier laminate

## Claims

1. A moisture-trapping film comprising:
a cationic polymer (a); and
a highly hygroscopic polymer (b) having an achieved humidity lower than that of the cationic polymer (a),
the highly hygroscopic polymer (b) being an anionic polymer neutralized product having a light transmittance of 90% or more at a wavelength of 400 nm as measured at 21°C in the form of an aqueous dispersion having a solid content concentration of 10 mass%.

2. The moisture-trapping film according to claim 1, wherein the highly hygroscopic polymer (b) is a neutralized product of an anionic polymer having an anionic functional group selected from the group consisting of a carboxy group, a sulfonic acid group, and a phosphoric acid group.

3. The moisture-trapping film according to claim 2, wherein the highly hygroscopic polymer (b) is a neutralized product of (meth)acrylic acid.

4. The moisture-trapping film according to any one of claims 1 to 3, wherein the highly hygroscopic polymer (b) exhibits a pH of 10 or less in an aqueous dispersion having a concentration of 5 mass% at 25°C.

5. The moisture-trapping film according to any one of claims 1 to 4, wherein the highly hygroscopic polymer (b) is present at an amount of from 11 to 1000 parts by mass per 100 parts by mass of the cationic polymer (a).

6. The moisture-trapping film according to any one of claims 1 to 5, wherein the moisture-trapping film exhibits a haze of 4.7% or less.

7. The moisture-trapping film according to claim 6, wherein the moisture-trapping film exhibits a surface roughness Sa (ISO 25178-2:2012) of 11 nm or less.

8. A gas-barrier laminate having a layered structure in which the moisture-trapping film described in any one of claims 1 to 7 and a barrier film having an inorganic barrier layer formed on a surface of a plastic base material are laminated.

9. A coating composition comprising: a cationic polymer (a);
a highly hygroscopic polymer (b) having an achieved humidity lower than that of the cationic polymer (a); and
a solvent,
the cationic polymer (a) and the highly hygroscopic polymer (b) dissolved or dispersed in the solvent,
the highly hygroscopic polymer (b) being an anionic polymer neutralized product having light transmittance of 90% or more at a wavelength of 400 nm as measured at 21°C in the form of an aqueous dispersion having a solid content concentration of 10 mass%.

10. The coating composition according to claim 9, wherein the highly hygroscopic polymer (b) exhibits a pH of 10 or less in an aqueous dispersion having a concentration of 5 mass% at 25°C.

11. The coating composition according to claim 9 or 10, wherein the highly hygroscopic polymer (b) is used at an amount of from 11 to 1000 parts by mass per 100 parts by mass of the cationic polymer (a).

12. The coating composition according to any one of claims 9 to 11, wherein the solvent is a mixed solvent of water and an alcohol.
